Europäisches Patentamt

European Patent Office

Office européen des brevets

(19)

(11) Numéro de publication: **0 070 341**
**B1**

(12) **FASCICULE DE BREVET EUROPEEN**

(45) Date de publication du fascicule du brevet: **23.10.85**

(51) Int. Cl.⁴: **G 01 M 3/20**

(21) Numéro de dépôt: **81401176.3**

(22) Date de dépôt: **22.07.81**

(54) Détecteur de fuites à hélium.

(43) Date de publication de la demande:
**26.01.83 Bulletin 83/04**

(45) Mention de la délivrance du brevet:
**23.10.85 Bulletin 85/43**

(84) Etats contractants désignés:
**AT BE CH DE FR GB IT LI LU NL SE**

(56) Documents cités:
**FR-A-2 066 532**
**FR-A-2 452 699**

**"Porta-Test" de la Société Varian daté 14031975 (détecteur de fruites à hélium. Porta-Test réf.0925K0777-301)**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Tallon, Jacques**
**1 Place Saint François**
**F-75000 Annecy (FR)**

(74) Mandataire: **Weinmiller, Jürgen et al**
**Zeppelinstrasse 63**
**D-8000 München 80 (DE)**

Courier Press, Leamington Spa, England.

## Description

La présente invention concerne un détecteur de fuites à hélium ne comprenant qu'une seule pompe, ladite pompe étant une pompe à vide secondaire comportant une entrée et une sortie, une cellule spectrométrique de mesure étant branchée à l'entrée de ladite pompe, ladite sortie étant reliée, par une conduite de sortie à une bride d'entrée de raccordement à une installation à tester.

On connaît par la notice "Porta-Test", datée du 14 mars 1975 de la Société Varian (détecteur de fuites à hélium Porta-Test réf. 0925K0777—301) un tel détecteur de fuite à hélium dans lequel le gaz traceur, l'hélium, traverse la pompe à vide secondaire, qui est une pompe à diffusion moléculaire, à contre courant.

Cependant, dans un tel détecteur où le gaz traceur traverse la pompe secondaire à contre courant, la sensibilité de l'appareil est beaucoup inférieure à celle d'un détecteur à schéma classique dans lequel le gaz traceur entre dans la pompe à diffusion de côté de l'entrée, c'est-à-dire du côté où est branché la cellule spectrométrique de mesure. En outre, la pompe à diffusion doit fonctionner en régime de sous-chauffe pour permettre ce passage à contre-courant du gaz traceur ce qui entraîne une mauvaise stabilité du signal d'hélium.

Le détecteur de fuite à hélium selon l'invention permettant d'éviter ces inconvénients est caractérisé en ce que la pompe secondaire est une pompe turbomoléculaire et en ce que son entrée est reliée à un point de la conduite de sortie par l'intermédiaire d'un étranglement.

Dans le dispositif selon l'invention, on conserve le sens classique de passage du gaz traceur dans la pompe secondaire.

Dans une demande de brevet européen EP— 0033945 publiée le 19 août 1981 (état de la technique selon l'article 54(3) CBE), on décrit un tel dispositif dans lequel la pompe secondaire est une pompe à diffusion.

Le dispositif selon l'invention qui utilise comme pompe secondaire une pompe turbomoléculaire permet d'éviter la pollution de la cellule d'analyse par les vapeurs d'huile qui se produit lorsque l'on utilise une pompe à diffusion moléculaire.

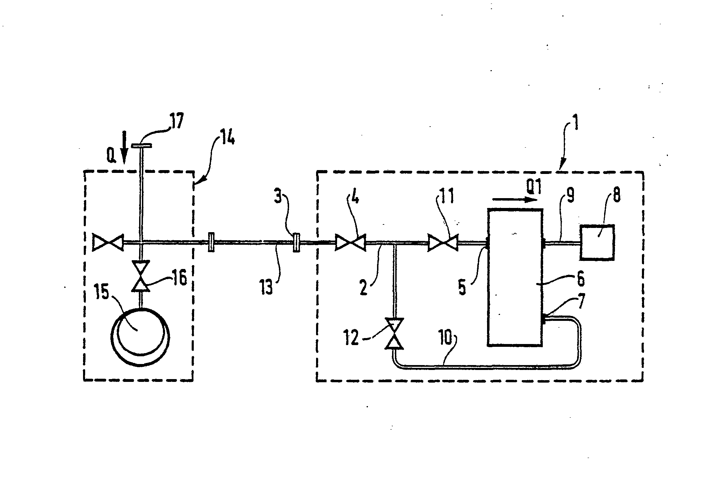

Les caractéristiques et avantages de l'invention ressortiront de la description d'un mode de réalisation donné à titre d'exemple et illustré dans le dessin.

La figure unique est une représentation schématique d'un détecteur de fuites à hélium selon l'invention.

Dans la figure, on a désigné par 1 l'ensemble d'un détecteur de fuites comportant une canalisation d'entrée 2, une bride d'entrée 3 et une vanne d'isolement 4.

La canalisation d'entrée 2 débouche sur l'entrée 5 d'une pompe par l'intermédiaire d'un diaphragme ou étranglement qui peut être constitué par une vanne de prélèvement 11 réglable. Une cellule spectrométrique de mesure 9 est reliée à la pompe 6 par l'intermédiaire d'une canalisation 9.

Selon l'invention, la pompe 6 est une pompe turbomoléculaire.

D'autre par, la sortie 7 de la pompe 6 est relié par une canalisation 10 et une vanne de mesure 12 en un point de raccordement sur la canalisation 2 entre les vannes 4 et 11.

La bride d'entrée 3 du détecteur 1 est, lors de son utilisation, raccordée par une canalisation 12 à un groupe de pompage auxiliaire 14 comprenant une pompe à palettes 15 avec une vanne d'isolement 16 et une bride de raccordement 17 à une installation à tester non représentée.

Le fonctionnement est le suivant. Dans ce montage, un flux d'hélium Q provenant de l'installation pourra donner un flux d'hélium Q1=nQ dans le circuit bouclé du spectromètre avec n supérieur à 1. Le rapport n est lié aux vitesses de pompage à l'entrée du spectromètre 8 et à l'entrée de la pompe auxiliaire de ce groupe. On est donc en présence d'un montage amplificateur de flux.

Dans un montage classique où la canalisation 7 de sortie de la pompe 6 serait reliée à une pompe auxiliaire à palettes, le flux d'hélium Q entrant dans l'installation aurait donné, dans le circuit du spectromètre, un flux plus petit

$$q=\frac{Q}{n}$$

avec n supérieur à 1, n étant également une fonction des vitesses de pompage à l'entrée du spectromètre et à l'entrée de la pompe auxiliaire.

Avec ce montage on peut effectuer un prélèvement de gaz dans le circuit d'entrée, et en fermant la vanne d'entrée 4 conserver le flux Q1 pendant un certain temps pour en effectuer la mesure. En effet, le flux Q1 circule en gardant une valeur constante dans la boucle fermée du circuit de la pompe 6. Il est possible d'obtenir la lecture du flux Q pénétrant dans l'installation, en fermant la vanne 12 sur la canalisation 10. On réalise alors la mesure en fermant successivement, après établissement du flux Q1, les vannes 12 puis la vanne d'isolement de la pompe auxiliaire 15. Le flux Q s'établit ainsi depuis l'entrée 3 jusqu'à la sortie 7 de la pompe 6 obturée par la vanne 12. L'hélium s'accumule dans le volume situé entre la sortie 7 et la vanne 12, ce que est sans inconvénient, car la pompe empêche la rétrodiffusion d'hélium vers la cellule spectrométrique 8.

Un autre avantage de ce montage est de permettre de réaliser un détecteur sans pompe à palettes, et ne comportant pas de bride de raccordement supplémentaire pour cette pompe à palettes.

Ainsi, en variante, s'il est nécessaire de protéger la cellule spectrométrique 8, il est possible d'intercaler entre la pompe 6 et la cellule 8 un piège quelconque qui peut être, par exemple, du type à azote liquide, ionique, ou encore à zéolithes.

D'autre part, pour améliorer le pompage, il est aussi possible de placer un piège entre la vanne de prélèvement 11 est l'entrée 5 de la pompe 6.

## Revendications

1. Détecteur de fuites à hélium ne comprenant qu'une seule pompe, ladite pompe étant une pompe à vide secondaire (6) comportant une entrée (5) et une sortie (7), une cellule spectrométrique de mesure (8) étant branchée à l'entrée de ladite pompe, ladite sortie étant reliée, par unffconduite de sortie (10) à une bride d'entrée (3) de raccordement à une installation à tester, caractérisé en ce que la pompe secondaire (6) est une pompe turbomoléculaire et en ce que son entrée (5) est reliée à un point de la conduite de sortie (10) par l'intermédiaire d'un étranglement (11).

2. Détecteur selon la revendication 1 caractérise en ce que l'étranglement est constitué par une vanne (11) réglable.

3. Détecteur selon la revendication 2 caractérisé en ce qu'il comporte une vanne d'isolement (4) placée entre ladite bride d'entrée (3) et ledit point de liaison de l'entrée (5) de la pompe avec la conduite de sortie (10).

4. Détecteur selon l'une des revendications 1 à 3 caractérisé en ce qu'il comporte une vanne de mesure (12) sur la conduite de sortie (10).

5. Détecteur selon l'une des revendications 1 à 4 caractérisé en ce qu'un piège est interposé entre la pompe (5) et la cellule spectrométrique (8).

6. Détecteur selon l'une des revendications 1 à 5 caractérisé en ce qu'un piège est interposé entre l'étranglement (11) et l'entrée (5) de la pompe (6).

## Patentansprüche

1. Heliumleckdetektor, der nur eine einzige Pumpe aufweist und zwar eine Sekundärvakuumpumpe (6), die einen Eingang (5) und einen Ausgang (7) aufweist, wobei eine spektrometrische Meßzelle (8) an der Eingang der Pumpe und der Ausgang über eine Ausgangsleitung (10) an einen Eingangsflansch (3) zum Anschluß an eine zu testende Anlage angeschlossen ist, dadurch gekennzeichnet, daß die Sekundärpumpe (6) eine Turbomolekularpumpe ist und daß ihr Eingang (5) mit einem Punkt der Ausgangsleitung (10) über eine Verengung (11) verbunden ist.

2. Detektor nach Anspruch 1, dadurch gekennzeichnet, daß die Verengung von einem regulierbaren Ventil (11) gebildet wird.

3. Detektor nach Anspruch 2, dadurch gekennzeichnet, daß er ein Isolierventil (4) aufweist, das zwischen dem Eingangsflansch (3) und dem Verbindungspunkt des Eingangs (5) der Pumpe mit der Ausgangsleitung (10) angeordnet ist.

4. Detektor nach einem der Ansprüche 1 bis 3, dadurch gekennzeichnet, daß er ein Meßventil (12) auf der Ausgangsleitung (10) aufweist.

5. Detektor nach einem der Ansprüche 1 bis 4, dadurch gekennzeichnet, daß eine Falle zwischen der Pumpe (6) und der spektrometrischen Zelle (8) angeordnet ist.

6. Detektor nach einem der Ansprüche 1 bis 5, dadurch gekennzeichnet, daß eine Falle zwischen der Verengung (11) un dem Eingang (5) der Pumpe (6) angeordnet ist.

## Claims

1. A helium leak detector comprising one single pump, said pump being a secondary vacuum pump (6) comprising an inlet (5) and an outlet (7), a spectrometrical measuring cell (8) being branched to the inlet of said pump, said outlet being connected, by an outlet duct (10), to an inlet flange (3) for the connection to an installation to be tested, characterized in that the secondary pump (6) is a turbomolecular pump and in that it inlet (5) is connected to a point of the outlet duct (10) via a bottle-neck (11).

2. A detector according to claim 1, characterized in that the bottle-neck is constituted by an adjustable valve (11).

3. A detector according to claim 2, characterized in that it comprises an isolating valve (4) placed between said inlet flange (3) and said connection point of the inlet (5) of the pump with the outlet duct (10).

4. A detector according to one of claims 1 to 3, characterized in that it comprises a measure valve (12) in the outlet duct (10).

5. A detector according to one of claims 1 to 4, characterized in that a trap is interposed between the pump (6) and the spectrometrical cell (8).

6. A detector according to one of claims 1 to 5, characterized in that a trap is interposed between the bottle-neck (11) and the inlet (5) of the pump (6).